# EUROPEAN PATENT SPECIFICATION

(11) **EP 0 518 358 B1**
(45) Date of publication and mention of the grant of the patent: **05.03.1997**
(21) Application number: 92109921.4
(22) Date of filing: 12.06.1992
(51) Int. Cl.: B60N 2/46

(54) **Seat of a vehicle with a lockable armrest**
Fahrzeugsitz mit verriegelbarer Armlehne
Siège de véhicule à accoudoir verrouillable

(30) Priority: 14.06.1991 JP 44876/91; 27.12.1991 JP 107995/91
(43) Date of publication of application: 16.12.1992
(73) Proprietor: DELTA KOGYO CO., LTD., Aki-gun Hiroshima-ken (JP)
(72) Inventor: Nakajima, Atsushi, c/o Delta, Aki-gun, Hiroshima-ken (JP); Imaoka, Terumasa, c/o Delta, Aki-gun, Hiroshima-ken (JP); Kaketani, Yoshiaki, c/o Delta, Aki-gun, Hiroshima-ken (JP)
(74) Representative: Füchsle, Klaus, Dipl.-Ing.

(56) References cited:
- WO-A-92/05978
- DE-A- 3 414 316
- DE-A- 3 701 419
- DE-A- 3 705 770
- DE-A- 3 825 781
- DE-A- 4 035 856

## Description

### BACKGROUND OF THE INVENTION

### 1. Field of the Invention

The present invention relates to a seat of a vehicle with a lockable armrest and, more particularly to a locking mechanism for preventing the armrest from protruding from the retracted or drawn position by an impact force.

### 2. Description of the Prior Art

Recently, various improvements have been proposed to enhance comforts of the cabin of the vehicle.

For instance, there has been known a seat structure wherein a retractable armrest is provided on a seat back of a rear seat of a vehicle. The armrest is usually held in a pulled out state and, accordingly, persons sitting at both sides of the same can rest their arms thereon. When three persons sit on the rear seat, the armrest is retracted into or pulled into the concave of the seat back so that all of them can sit easily.

In this seat structure, the armrest is held in the concave of the seat back only by fittingness or friction between the concave and the armrest and, accordingly, when an impact force such as an inertia force by a sudden braking is applied to the armrest, it is suddenly thrown out forwardly.

A further prior art that is of interest is that disclosed in DE-A-3 414 316 in which a pivotable armrest for a vehicle seat is provided with a locking mechanism which is automatically activated when a large impact force is applied to the armrest in order to prevent unwanted movement of the armrest from a retracted setting in the event of such an impact. The locking mechanism includes a lock element secured to the armrest and an engaging element provided on the frame of the rear seat which comprises a locking lever having a guide path for the lock element. Additionally, a weight 9 and a spring 10 are attached to the lever, the spring holding the locking lever in a neutral position. In the event of a high impact force, the weight causes a displacement of the locking lever so that the lock element can no longer travel along the guide path of the locking lever and thus prevents movement of the armrest away from its retracted setting.

### SUMMARY OF THE INVENTION

An object of the present invention is to provide a locking mechanism for locking the armrest in a retracted state automatically only when a large impact force is applied to the armrest.

Another object of the present invention is to provide a locking mechanism for locking the armrest which can be easily arranged in the armrest compactly.

The present invention is as defined in the accompanying Claim 1 that has been divided into a two part form based on the assumption that the aforesaid DE-A-3 414 316 is the nearest state of the art.

### BRIEF DESCRIPTION OF THE DRAWINGS

These and other objects and features of the present invention will become clear from the following description taken in conjunction with the preferred embodiments thereof with reference to the accompanying drawings throughout which like parts are designated by like reference numerals, and in which:
Fig. 1 is a perspective view of seats of a car to which the present invention is applied;
Fig. 2 is a perspective view of a rear seat having a retractable armrest;
Fig. 3 is an exploded perspective view of the locking mechanism according to the first preferred embodiment of the present invention;
Fig. 4 is a perspective view of the locking mechanism in an assembled state;
Fig. 5 is a partial perspective view of the clicking mechanism provided together with the locking mechanism;
Fig. 6 is a front view of the locking mechanism in which the lid is removed;
Fig. 7 is an explanatory view for showing the function of the clicking mechanism;
Fig. 8 is an exploded perspective view of the locking mechanism according to the second preferred embodiment of the invention;
Fig. 9 is a perspective view of the locking mechanism in an assembled state;
Fig. 10 is a front view of the locking mechanism shown in Fig. 8 for showing a normal state thereof; and
Fig. 11 is an explanatory view for showing the locking motion by the locking mechanism according to the second preferred embodiment of the present invention.

### DETAILED DESCRIPTION OF THE PREFERRED EMBODIMENTS

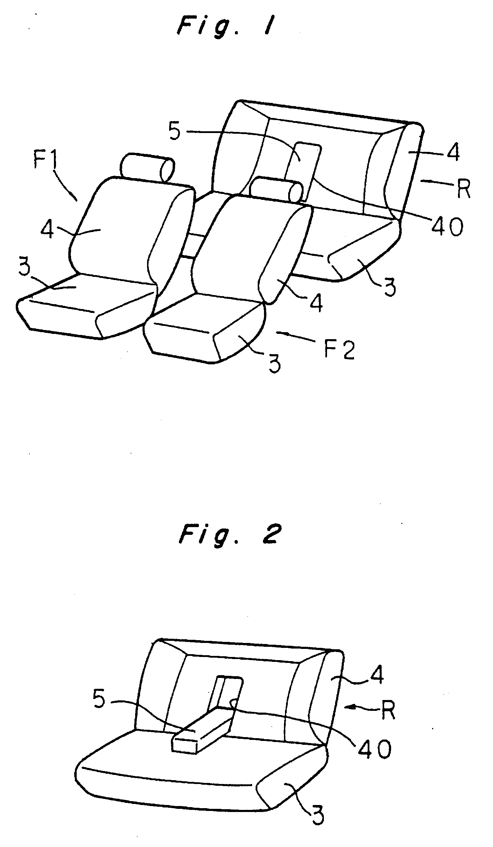

As shown in Fig. 1, there are arranged two front seats F1 and F2 and one rear seat R on a floor panel each of which is comprised of seat bottom 3 and seat back 4.

The rear seat R is provided with a retractable armrest 5 at the center of the seat back 4 thereof in a direction of the width of a vehicle. This armrest 5 can be housed in a concave 40 formed in a direction of the height of the seat back 4 and pulled out from the housed position to the protruded position as shown in Fig. 2.

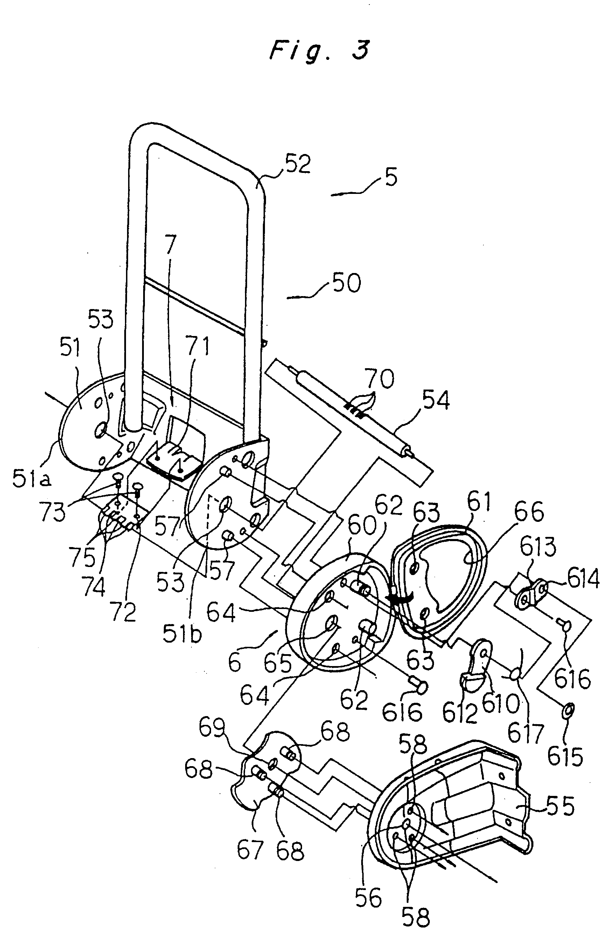

Fig. 3 is an exploded perspective view of a locking mechanism to be installed in the armrest according to a preferred embodiment of the present invention.

The armrest 5 has a main frame 50 which is covered by a cushion sheet material such as an urethane foam material. The main frame 50 is comprised of a plate-like base frame 51 having flange portions 51a and 51b at both ends thereof and a reversed U-shape frame 52 the lower ends of which are rigidly secured to the base frame 51. A hinge shaft 54 is inserted through shaft holes 53 formed at each center of the flange portions 51a and 51b and one end of said shaft is extended toward an armrest bracket 55 which is fixed to the side wall of the concave 40, said one end of the shaft being hingedly supported in a bearing 56 of the armrest bracket 55. The other end of the hinge shaft 54 is also hingedly supported by an armrest bracket (not shown in Fig. 3) and, accordingly, the armrest 5 is hingedly supported at the lower end thereof so that it may be pivotable between the pulled into position and the pulled out position.

As shown in Fig. 3, there is provided a locking mechanism 6 between the flange portion 51b of the main frame 51 and the armrest bracket 55. The locking mechanism 6 is housed in a casing comprised of a casing body 60 and a lid 61 formed together therewith hingedly which are made of a resin. The casing body 60 has two securing pins 62 formed protruded from the bottom of the casing body 60 and the lid 61 has two small apertures 63 into which said securing pins 62 are fitted so that the lid 61 may be fixed to the casing body 60.

The casing body 60 is secured to the flange portion 51b of the base frame 51 by screws 616 in a state that positioning pins 57 protruded from the flange portion 51b are fitted into corresponding small apertures 64 formed on the bottom of the casing body 60 and, thereby, a shaft hole 65 formed on the bottom of the casing body 60 coincides with the shaft hole 53 of the flange portion 51b to allow the insertion of the hinge shaft 54. Further, the lid 61 has a relatively large window 66.

Inside the casing, a locking plate 67 having three pins 68 and a shaft aperture 69 is arranged. This locking plate 67 is secured to the armrest bracket 55 by fitting said three pins 68, through the window 66 of the lid 61, into three corresponding small aperture 58 formed at the side of the armrest bracket 55, respectively, so that the shaft aperture 69 coincides with the shaft apertures 65 and 56 of the casing 60 and the bracket 55.

Further, a pendulum 610 is arranged engageably with the locking plate 67. The upper end of the pendulum 610 is pivotably supported by one of the pins 62 for fixing the lid 61 and the pendulum 610 has an engaging claw 612 being engageable to a notched portion 67A of the locking plate 67 as will be explained in detail herein below. A step-like support plate 613 having two small apertures 614 one of which is fastened to the bottom of the casing by a screw 616 and the other is fitted to the pin 62 to which the upper end of the pendulum has been fitted. To the free end of the pin 62 protruding from the aperture 614 of the support plate 613 an E ring 615 is snapped onto the pin in order to prevent the support plate 613 and the pendulum 610 from coming off of the pin 62. A wire spring 617 is wound around the pin 62 so that one end thereof engages with the casing 60 and the other end with the pendulum 610, respectively. This wire spring 617 is designed to urge the pendulum 610 toward a position whereat the engaging claw 612 does not engage with the locking plate 67.

The armrest according to the preferred embodiment of the present invention has a clicking mechanism 7 being comprised of three flat portions 70 formed on the middle portion of the hinge shaft 54 and a plate spring 72 the base portion of which is fastened to a tongue-like support plate 71 formed by punching with screws 73.

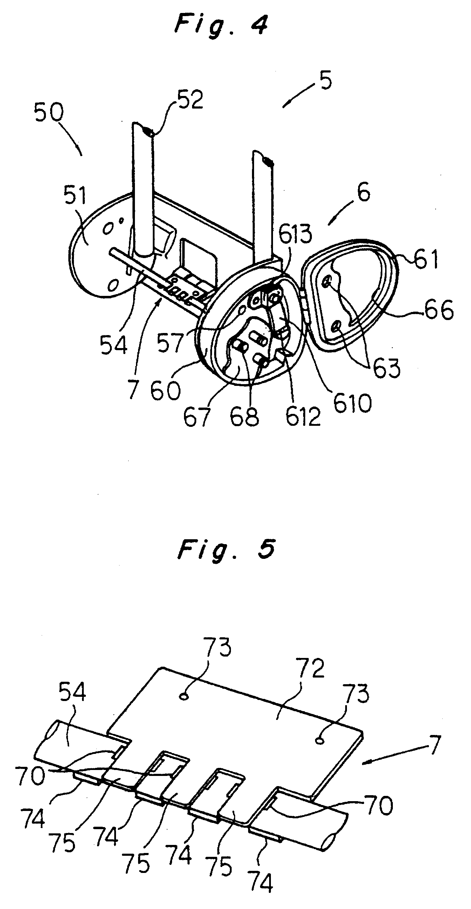

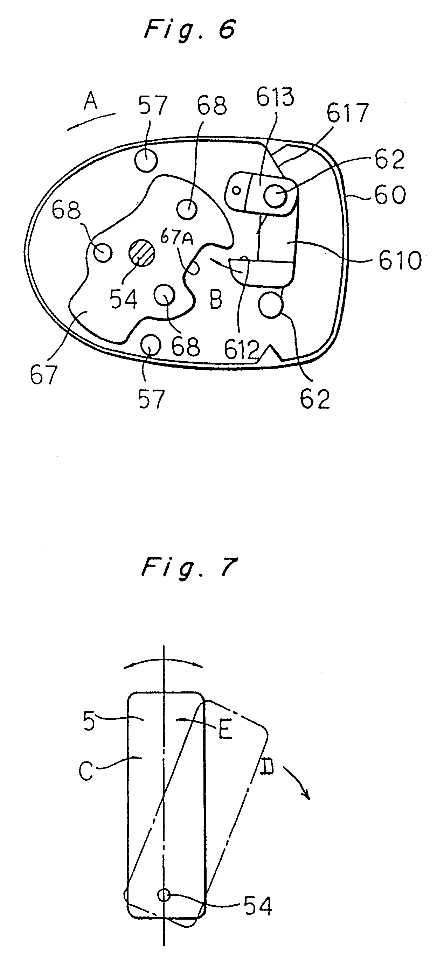

Along the free side of the plate spring 72, there are formed by punching, four round portions 74 for abutting to the round surface of the hinge shaft 54 and three flat portions 75 abutting to respective flat portions 70 of the hinge shaft, as shown in Fig. 5. These round portions 74 and flat portions 75 cooperate to keep the hinge shaft 54 therebetween and to exert on the hinge shaft 54 a return force so that the hinge shaft 54 is urged to return the position at which the flat portions 75 of the plate spring 72 abut corresponding flat portions 74 of the hinge shaft 54. In other words, the clicking mechanism 7 gives a resistance upon pulling out the armrest 5 from its retracted position in a direction indicated by an arrow E in Fig. 7 and a return force upon returning the same to the retracted position as indicated by an arrow D in Fig. 7.

In operation of the armrest having the locking mechanism therein, the armrest 5 is usually held at the pulled out position, as shown in Fig. 2 and passengers on the rear seat R can rest their arms thereon and enjoy a comfortable drive in a relaxed posture.

In this state, the pendulum 610 is held at a position apart from the locking plate 67 by the wire spring 617 so that no noises by oscillation of the pendulum 610 are generated even at a usual braking operation or hill climbing.

On the other hand, in the retracted state of the armrest, the friction between the armrest and the concave serves to hold the armrest in the concave as well as the click mechanism 7. When a large inertia force due to a quick braking or bump is exerted to the armrest 5, the armrest tends to be pulled out from the retracted position (See an arrow E of Fig. 7).

However, the pendulum 610 also receives the inertia force and, thereby, is rotated around the pin 62 against the spring force by the wire spring 617 in a clockwise direction as indicated by an arrow B in Fig. 6. Due to this rotation of the pendulum 610, the engaging claw 612 thereof engages with the notched portion 67A of the locking plate 67 and, thereby, the armrest 5 is locked by the locking plate 67 as a whole. Thus the protrusion of the armrest is prevented.

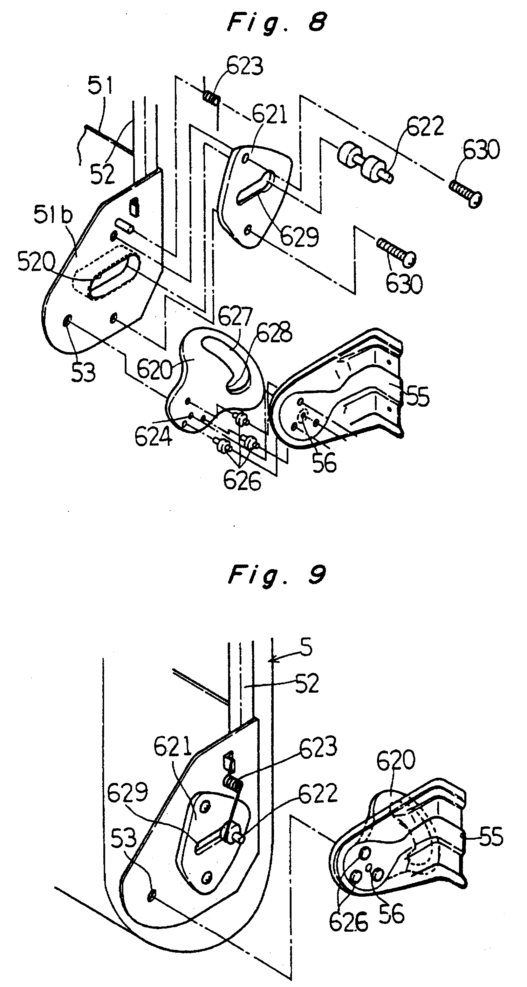

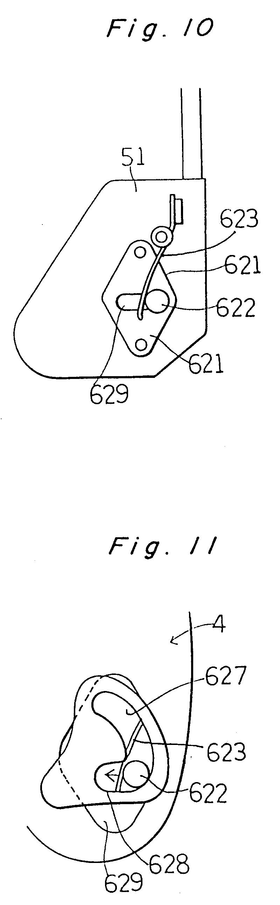

Figs. 8 to 11 show a second preferred embodiment of the present invention wherein the same reference numerals denote identical and/or corresponding elements shown in Figs. 1 to 7.

As shown in Fig. 8, there are provided a locking plate 620 of substantially bell shape and a guide plate 621 of substantially rhomb shape between the flange portion 51b of the base frame 51 and the bracket 55 fixed to the seat back.

The locking plate 620 is secured to the armrest bracket 55 at the head portion of the bell shape with three pins 626 so that a shaft hole 624 coincides with the shaft holes 53 and 56 of the flange portion 51b and the armrest bracket 55.

Further the guide plate 621 is secured to the flange portion 51b with two screws 630 so that a substantially straight guide slot 629 formed thereon in a diagonal direction coincides with a substantially straight guide slot 520 formed on the flange portion 51b.

In these guide slots 520 and 629, a stopper 622 having two rolls connected by a shaft is inserted slidably and is biased by a wire spring 623 in a direction toward the rear end of each of the guide slots.

Further, the stopper 622 engages in an arc-like slot 627 provided in the bottom portion of the bell-like locking plate 620 which is secured to the armrest bracket 55. The lower end of the guide slot 627 is formed as a lock groove 628 for locking the stopper 622 therein.

In this structure, the stopper 622 usually slides in the guide slot 627 upon pulling out the armrest or retracting the same.

However, if a large impact force is exerted on the stopper 622 in the retracted state of the armrest, the stopper 622 is moved into the lock groove or notch 628 against the spring force and, thereby, the armrest 5 is locked as a whole in the retracted state.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. A locking mechanism (6) for a retractable armrest (5) of a seat (R) the lower end of which is hingedly supported in a concave (40) provided on a seat back (4) of said seat being comprised of
a lock element (67, 620) secured to one of said armrest (5) and seat back (4),
an engaging element (610, 612; 622) being arranged at the other one of said armrest (5) arid seat back (4) which is movable between a first position whereat said engaging element (610, 612; 622) does not engage with said lock element (67, 620) and a second position whereat said engaging element engages with said lock element so that said armrest can be locked in a retracted state; and
a biasing means (617, 623) for biasing said engaging element toward said first position;
wherein said armrest (5) is locked in the retracted state when an inertia force larger than the force by said biasing means (617, 623) is exerted to said engaging element (610, 612; 622) and, thereby, urged toward said second position;
**characterized in that**
said lock element is a locking plate (67, 620); and
said engaging element (610, 612; 622) comprises:
(a) a pendulum (610) pivotally supported at one end thereof and provided at its other end with an engaging claw (612) for engagement, when urged to said second position, with a notched portion in said locking plate 67; or
(b) a slidable stopper (622) guidable along an arc-like guide slot (627) in said locking plate (620), there being a lock groove (628) in said guide slot (627) with which said stopper (622) engages when urged to said second position.

2. A locking mechanism (6) as claimed in Claim 1, in which said lock element (67, 620) is secured to said seat back (4) and said engaging element (67, 612; 622) is arranged in said armrest (5).

3. A locking mechanism (6) as claimed in Claim 1 or Claim 2 comprising a click means (7) for clicking said armrest (5) when the same is pulled into said concave (40).

## Patentansprüche

1. Arretiermechanismus (6) für eine versenkbare Armlehne (5) eines Sitzes (R), deren unteres Ende in einer auf einer Rückenlehne (4) des besagten Sitzes vorgesehenen Aushöhlung (40) schwenkbar gehalten wird, umfassend
ein an einem von besagter Armlehne (5) und Rückenlehne (4) befestigtes Sperrelement (67, 620),
ein am anderen von besagter Armlehne (5) und Rückenlehne (4) angeordnetes Eingriffselement (610, 612; 622), das zwischen einer ersten Position, in der das besagte Eingriffselement (610, 612; 622) nicht mit dem besagten Sperrelement (67, 620) in Eingriff tritt, und einer zweiten Position, in der das besagte Eingriffselement mit dem besagten Sperrelement in Eingriff tritt, beweglich ist, so daß die besagte Armlehne in einem versenkten Zustand arretiert werden kann; und
eine Vorspanneinrichtung (617, 623) zum Vorspannen des besagten Eingriffselements in Richtung der besagten ersten Position;
wobei die besagte Armlehne (5) im versenkten Zustand arretiert wird, wenn eine Trägheitskraft, die größer als die Kraft durch die besagte Vorspanneinrichtung (617, 623) ist, auf das besagte Eingriffselement (610, 612; 622) ausgeübt und dieses dadurch in Richtung der besagten zweiten Position getrieben wird;
dadurch gekennzeichnet, daß
das besagte Sperrelement eine Sperrplatte (67, 620) ist; und das besagte Eingriffselement (610, 612; 622) umfaßt:
(a) ein Pendel (610), das an seinem einen Ende schwenkbar gehalten wird und an seinem anderen Ende mit einer Eingriffsklaue (612) versehen ist, zum Eingriff mit einem Kerbteil in der besagten Sperrplatte (67), wenn es in die besagte zweite Position getrieben wird; oder
(b) einen verschiebbaren Stopper (622), der entlang eines bogenartigen Führungsschlitzes (627) in der besagten Sperrplatte (620) lenkbar ist, wobei sich in dem besagten Führungsschlitz (627) eine Sperrnut (628) befindet, mit welcher der besagte Stopper (622) in Eingriff tritt, wenn er in die besagte zweite Position getrieben wird.

2. Arretiermechanismus (6) nach Anspruch 1, dadurch gekennzeichnet, daß das besagte Sperrelement (67, 620) an der besagten Rückenlehne (4) befestigt ist, und das besagte Eingriffselement (67, 612; 622) in der besagten Armlehne (5) angeordnet ist.

3. Arretiermechanismus (6) nach Anspruch 1 oder Anspruch 2, dadurch gekennzeichnet, daß er eine Rasteinrichtung (7) zum Einrasten der besagten Armlehne (5) umfaßt, wenn dieselbe in die besagte Aushöhlung (40) eingezogen ist.

## Revendications

1. Mécanisme de blocage (6) pour accoudoir rétractable (5) d'un siège (R), l'accoudoir ayant une extrémité inférieure supportée de manière articulée dans une cavité concave (40) formée sur un dossier (4) du siège,
comprenant :
un élément de blocage (67, 620) fixé à l'accoudoir (5) ou au dossier (4),
un élément de coopération (610, 612 ; 622) placé sur le dossier (4) ou l'accoudoir (5) respectivement, mobile entre une première position dans laquelle l'élément de coopération (610, 612 ; 622) n'est pas en prise avec l'élément de blocage (67, 620), et une seconde position dans laquelle l'élément de coopération est en prise avec l'élément de blocage, si bien que l'accoudoir peut être bloqué à l'état reculé, et
un dispositif (617, 623) de rappel de l'élément de coopération avec la première position,
dans lequel l'accoudoir (5) est bloqué à l'état reculé lorsqu'une force d'inertie dépassant la force appliquée par le dispositif de rappel (617, 623) est appliquée à l'élément de coopération (610, 612 ; 622) et ainsi repousse celui-ci vers la seconde position,
caractérisé en ce que :
l'élément de blocage est une plaque de blocage (67, 620), et
l'élément de coopération (610, 612 ; 622) comprend :
(a) un pendule (610) supporté de manière pivotante à une première extrémité et ayant, à son autre extrémité, une griffe (612) de coopération avec une partie à encoche de la plaque de blocage (67) lorsqu'il est repoussé vers sa seconde position, ou
(b) un organe coulissant d'arrêt (622) qui peut être guidé suivant une fente de guidage (627) en arc de courbe formée dans la plaque de blocage (620), une gorge de blocage (628) étant disposée dans la fente de guidage (627) et coopérant avec l'organe d'arrêt (622) lorsqu'il est repoussé vers la seconde position.

2. Mécanisme de blocage (6) selon la revendication 1, dans lequel l'élément de blocage (67, 620) est fixé au dossier (4) du siège, et l'élément de coopération (67, 612 ; 622) est disposé dans l'accoudoir (5).

3. Mécanisme de blocage (6) selon la revendication 1 ou 2, comprenant un dispositif (7) d'encliquetage de l'accoudoir (5) lorsque celui-ci est tiré dans la partie concave (40).
